# EUROPÄISCHE PATENTSCHRIFT

(11) **EP 2 048 009 B1**
(45) Veröffentlichungstag und Bekanntmachung des Hinweises auf die Patenterteilung: **11.12.2013**
(21) Anmeldenummer: 08017329.7
(22) Anmeldetag: 02.10.2008
(51) Int. Cl.: B60H 1/00

(54) **Kraftfahrzeug-Klimaanlagenanordnung**
Vehicle air conditioning system
Agencement de climatisation de véhicule automobile

(30) Priorität: 12.10.2007 DE 102007049340
(43) Veröffentlichungstag der Anmeldung: 15.04.2009
(73) Patentinhaber: Behr GmbH & Co. KG, 70469 Stuttgart (DE)
(72) Erfinder: Pfander, Andreas, 71384 Weinstadt (DE); Augull, Michael, 71088 Holzgerlingen (DE); Burkhardt, Carsten, 74653 Künzelsau (DE); Schweizer, Gebhard, 71229 Leonberg (DE)
(74) Vertreter: Grauel, Andreas

(56) Entgegenhaltungen:
- EP-A- 1 522 434
- DE-A1- 10 002 712
- FR-A- 2 889 486
- JP-A- 57 121 914

## Beschreibung

Die Erfindung betrifft eine Kraftfahrzeug-Klimaanlagenanordnung gemäß dem Oberbegriff des Anspruches 1.

Bei herkömmlichen Kraftfahrzeug-Klimaanlagen sind üblicherweise der Heizer und der Verdampfer stehend und im Wesentlichen parallel zueinander angeordnet, um eine gute, möglichst verlustfreie Luftdurchströmung zu ermöglichen. Hierbei ist durch entsprechende Strömungsverläufe der Luft durch die Wärmetauscher auch eine Temperaturschichtung möglich, um den Komfort zu verbessern, wobei insbesondere die dem Fußraum zugeführte Luft wärmer als die dem Kopfbereich zugeführte Luft ist.

Aus der DE 10 2004 044 038 A1 ist eine Klimaanlagenanordnung bekannt, mit einem nach einem Gebläse, einem Verdampfer und Heizer in einem Luftführungsgehäuse angeordneten Mischraum, von dem eine Mehrzahl von Luftkanälen abzweigt, welche mittels Klappen steuerbar sind, wobei mindestens zwei benachbarte Luftkanäle von einer gemeinsamen Klappe gesteuert werden, und mindestens eine Klappe vorgesehen ist, bei welcher der Schwenkweg ihrer Sperrfläche oder ihres Flügels in einem Luftkanal oder entlang dem Ende eines Luftkanals erfolgt, ohne dass die Sperrfläche oder der Flügel in den Mischraum ragt. Die Klimaanlagenanordnung ist hierbei derart ausgebildet, dass der Verdampfer seitlich versetzt vom Gebläse und der Heizer samt einem Zuheizer nahezu senkrecht zum Verdampfer zentral etwas beabstandet vor demselben angeordnet ist, so dass sich insgesamt eine relativ kompakte Klimaanlage ergibt, wobei sowohl Heizer und Zuheizer als auch Verdampfer üblicherweise stehend angeordnet sind, so dass der gesamte Strömungsverlauf der Luft im Wesentlichen in einer horizontalen Ebene erfolgt.

Die EP 10 835 773 B1 offenbart eine Klimaanlage für einen Fahrzeuginnenraum mit getrennter linksseitiger und rechtsseitiger Regelung. Verdampfer und Heizer sind parallel zueinander angeordnet, wobei der Kaltluftstrom, der im Kühlbetrieb um den Heizer herum geleitet werden muss, in zwei Teilluftströme aufgetrennt wird, die seitlich oder aber oben und unten am Heizer vorbei geführt werden.

Die JP 57 121 914 A, die als nächtliegender Stand der Technik angesehen wird, offenbart eine weitere bekannte Klimaanlage.

Derartige Klimaanlagenanordnungen lassen noch Wünsche offen.

Es ist Aufgabe der Erfindung, eine verbesserte Kraftfahrzeug-Klimaanlagenanordnung zur Verfügung zu stellen.

Diese Aufgabe wird gelöst durch eine Kraftfahrzeug- Klimaanlagenanordnung, insbesondere für eine Fond-Klimaanlage, mit den Merkmalen des Anspruchs 1. Vorteilhafte Ausgestaltungen sind Gegenstand der Unteransprüche.

Erfindungsgemäß ist eine Kraftfahrzeug-Klimaanlagenanordnung, insbesondere für eine Fond-Klimaanlage, vorgesehen, mit mindestens einem Heizer und mindestens einem Verdampfer, die in einem Luftführungsgehäuse angeordnet sind, vorgesehen, wobei der Heizer zwischen zwei ober- und unterhalb der Luftdurchtrittsfläche des Heizers angeordneten Luftkanälen, die von vom Verdampfer kommender, kalter Luft durchströmbar sind, angeord-net ist. Hierbei ist erfindungsgemäß die Luft mittels mindestens zweier Temperaturklappen, wobei bevorzugt mindestens eine Temperaturklappe oberhalb des Heizers und bevorzugt mindestens eine Temperaturklappe unterhalb des Heizers angeordnet ist, bei voller Kühlleistung der Klimaanlage oben und unten am Heizer geregelt vorbeileitbar, so dass der Heizer im Betriebszustand "maximal kalt" zwischen zwei Kaltluftströmen angeordnet ist. Besonders vorteilhaft bei der erfindungsgemäßen Klirnaanlagenanördnung ist, dass ein sehr großer, durchgehender Kaltluftquerschnitt vorgesehen sein kann, der insbesondere auch in zwei oder mehr Luftkanäle unterteilt sein kann, die jeweils von einem Teilluftstrom durchströmbar sind, so dass insbesondere im Kühlbetrieb ein geringer luftseitiger Druckverlust möglich ist. Die Aufteilung des Kaltluftstroms auf zwei (oder mehr) Querschnitte ermöglicht zudem durch gezielte Lenkung nur eines Teils der Kaltluft durch den Heizer, dass auf relativ einfache Weise eine Temperaturschichtung der dem Fahrzeuginnenraum zuzuführenden Luft erreicht werden kann. Dabei sind die Ebenen des Heizers und des Verdampfers, die jeweils senkrecht von Luft durchströmt werden, in einem Winkel von 90° +/- 20°, insbesondere bevorzugt in einem Winkel von 90° +/- 10°, und ganz besonders bevorzugt in einem Winkel von ca. 90°, zueinander angeordnet. Eine derartige Anordnung ermöglicht den vorstehend genannten, sehr großen Kaltluftquerschnitt im gesamten Bereich nach dem Verdampfer und vor der Verteilung der Luft auf einzelne Luftkanäle, über welche die Luft einzelnen Bereichen des Fahrzeuginnenraums zugeführt wird. Durch eine entsprechende Anordnung ermöglicht sich eine langgestreckte, relativ flach aber trotzdem kompakt bauende Klimaanlage, wie sie insbesondere für Fond-Klimaanlagen größerer Limousinen geeignet ist. Die Klimaanlage kann beispielsweise im Bereich der Mittelkonsole oder im Bereich der hinteren Radkästen angeordnet sein. Eine erfindungsgemäße Klimaanlagenanordnung kann auch teilweise unter dem Fahrer- oder Beifahrersitz und unterhalb des Fußraumes der zweiten Sitzreihe angeordnet sein, wobei bevorzugt das Gebläse unter dem Fahrer oder Beifahrersitz und der Verdampfer und der Heizer unterhalb eines Fußraums der zweiten Sitzreihe angeordnet sind, wodurch sich eine besonders raumsparende Anordnung der Klimaanlage ermöglicht.

Der Verdampfer ist erfindungsgemäß stehend und der Heizer - in normaler Luftströmungsrichtung nach dem Verdampfer - liegend angeordnet. Hierbei soll unter "stehend" im Folgenden verstanden werden, dass die einander gegenüberliegenden Seitenflächen, die von Luft durchströmt werden, in zumindest im Wesentlichen vertikal angeordneten Ebenen, d.h. +/-10° zur Vertikalen, liegen. Unter "liegend" soll im Folgenden verstanden werden, dass die einander gegenüberliegenden Seitenflächen, die von Luft durchströmt werden, in zumindest im Wesentlichen horizontal angeordneten Ebenen, d.h. +/-10° zur Horizontalen, liegen. Dabei steht das entsprechende Kraftfahrzeug, in welchem die Klimaanlage eingebaut ist, auf einer horizontalen Ebene.

Erfindungsgemäß ist der Verdampfer möglichst exakt vertikal und der Heizer leicht geneigt, insbesondere derart, dass das verdampferseitige Ende etwas tiefer als das gegenüberliegende Ende des Heizers angeordnet ist, so dass zum einen der Strömungsverlauf um den Heizer im Kaltluftbetrieb möglichst wenig behindert ist, und zum anderen beim Warmluftbetrieb die Luft nicht zu sehr umgelenkt werden muss, wobei in diesem Fall der Heizer von der zu erwärmenden Luft von oben nach unten durchströmt wird. Der Neigungswinkel zur Horizontalen beträgt vorzugsweise maximal 10°, insbesondere bevorzugt maximal 5°.

Besonders vorteilhaft ist, wenn der Heizer bezüglich der Vertikalen mittig vor dem Verdampfer angeordnet ist, so dass eine gleichmäßige Aufteilung des vom Verdampfer kommenden Luftstroms möglich ist.

Das benachbarte Ende des Heizers ist vorzugsweise maximal eine Länge, die der zweifachen Tiefe, insbesondere der einfachen Tiefe, des Heizers entspricht, vom Verdampfer beabstandet. Dieser Abstand reicht aus, um den in der gleichen Ebene angeordneten Bereich des Verdampfers nicht vollständig abzudecken, so dass auch dieser durchströmende Luft kühlt. Er ist jedoch nur so groß, dass sich die Baulänge der gesamten Anordnung nicht unnötig vergrößert.

Bevorzugt sind räumlich ober- und unterhalb des Heizers zumindest im Misch- und Kaltluftbetrieb durchströmbare Luftkanäle, wobei der Luftstrom in diesen Betriebszuständen nach dem Verdampfer in zwei entsprechende Teilluftströme aufgeteilt wird, so dass der Heizer oben und unten von Kaltluft umströmt wird.

Besonders vorteilhaft ist in diesem Zusammenhang, wenn der Heizer im Warmluftbetrieb von oben nach unten durchströmt wird, da sich so automatisch eine Temperaturschichtung im Luftführungsgehäuse ergibt, welche auch auf besonders einfache Weise, nämlich durch den jeweiligen Ort der Anordnung der Öffnungen der einzelnen Luftkanäle zum Fahrzeuginnenraum im nachfolgenden Mischraum, eine Temperaturschichtung der Luft im Fahrzeuginnenraum ermöglicht.

Bevorzugt ist ein Gebläse neben dem Verdampfer und Heizer angeordnet, wobei die Drehachse des Gebläses in horizontaler Richtung verlaufend angeordnet ist, insbesondere bevorzugt senkrecht zur Fahrzeugmittellängsebene. Dies ermöglicht eine relativ gleichmäßige Luftverteilung auf den gesamten Verdampferquerschnitt.

Das Gebläse ist vorzugsweise räumlich in etwa gleicher Höhe mit dem Verdampfer und Heizer angeordnet, wodurch sich eine langgestreckte Reihe ergibt. Vorzugsweise ist es im Kraftfahrzeug in normaler Fahrtrichtung desselben vor dem Verdampfer und Heizer angeordnet.

Bevorzugt ist der minimale, von Luft durchströmte Querschnitt im Betriebszustand "maximal kalt" größer als der minimale, von Luft durchströmte Querschnitt im Betriebszustand "maximal warm", d.h. der Strömungswiderstand für die im Luftgehäuse strömende Luft ist im Betriebszustand "maximal kalt" ausreichend groß, so dass es kaum zu Druckverlusten und in Zusammenhang mit denselben stehenden Leistungseinbußen und/oder unerwünschten Geräuschen kommt.

Im Folgenden wird die Erfindung anhand eines Ausführungsbeispiels unter Bezugnahme auf die Zeichnung im Einzelnen erläutert. Es zeigen:
- Fig. 1: einen Schnitt entlang der vertikalen Fahrzeugmittellängsebene durch die Kraftfahrzeug-Klimaanlage in der Betriebsstellung "maximal warm" gemäß dem Ausführungsbeispiel,
- Fig. 2: einen Schnitt durch die Klimaanlage von Fig. 1 in der Betriebsstellung "maximal kalt", und
- Fig. 3: einen Schnitt durch die Klimaanlage von Fig. 1 in der Betriebsstellung "50%warm / 50% kalt".

Eine erfindungsgemäße Kraftfahrzeug-Klimaanlagenanordnung, vorliegend für eine Fond-Klirnaanlage 1 für eine Großraumlimousine, weist ein mehrteiliges Luftführungsgehäuse 2 auf, in welchem ein Gebläse G, welches Umluft aus dem Fahrzeuginnenraum und/oder Frischluft aus der Umgebung des Kraftfahrzeugs ansaugt, ein der Lufttemperierung dienender Verdampfer V und Heizer H angeordnet sind.

Die gesamte Klimaanlage 1 ist relativ flach und langgestreckt ausgebildet, wobei vorliegend das Gebläse G, der Verdampfer V und der Heizer H in einer Reihe in Längsrichtung des Kraftfahrzeugs angeordnet sind. Dabei ist die Klimaanlage 1 vorliegend im Bereich der Mittelkonsole angeordnet.

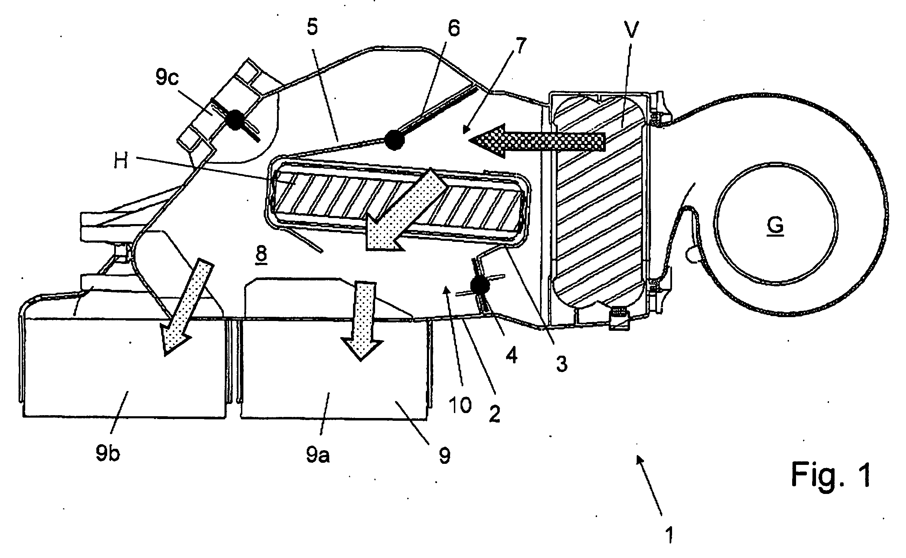

Die Drehachse des Gebläses G verläuft, wie aus Fig. 1 ersichtlich, senkrecht zur Mittellängsebene des Kraftfahrzeugs. Benachbart des Gebläses G ist der Verdampfer V angeordnet, wobei dieser vorliegend aufrecht stehend ausgerichtet ist, so dass er von der durch das Gebläse G angesaugten Luft in Richtung der Fahrzeugmittellängsebene durchströmt wird. Etwa in Höhe der Mitte des Verdampfers V ist mit kleinem Abstand von demselben der Heizer H angeordnet, wobei dieser liegend ausgerichtet ist, d.h. der Verdampfer V und der Heizer H sind etwa in einem Winkel von 90° zueinander angeordnet. Der Heizer H ist vorliegend in einem Winkel von 3° zur Horizontalen geneigt, wobei sein verdampferseitiges Ende tiefer als das vom Verdampfer V entfernte Ende angeordnet ist.

Das Luftführungsgehäuse 2 weist eine erste Trennwand 3 auf, welche das verdampferseitige Ende des Heizers H umgibt und nach unten zur Außenwand des Luftführungsgehäuses 2 geführt ist. In einer unterhalb des Heizers H angeordneten Öffnung der ersten Trennwand 3 ist eine erste Temperaturklappe 4 angeordnet, welche den am Heizer H vorbeiströmenden Luftstrom regelt. Gemäß dem in Fig. 1 dargestellten Betriebszustand "maximal warm", wird die gesamte vom Verdampfer V kommende Luft zwecks Erwärmung durch den Heizer H geleitet, weshalb die die erste Temperaturklappe 4 geschlossen ist. Vorliegend handelt es sich hierbei um eine zentral gelagerte, zweiflügelige Klappe, jedoch sind auch andere Klappen möglich. Beispielsweise ist an Stelle der dargestellten, symmetrisch ausgebildeten zweiflügefigen Klappe auch eine einflügelige Klappe mit einer benachbart dem Luftführungsgehäuse 2 angeordneten Schwenkachse oder auch ein anderes Stellorgan möglich.

Am anderen Ende des Heizers H ist eine zweite Trennwand 5 vorgesehen, welche den Heizer H umgibt und nach oben zur oberen Außenwand des Luftführungsgehäuses 2 geführt ist. In einer oberhalb des Heizers H angeordneten Öffnung der zweiten Trennwand 5 ist eine zweite Temperaturklappe 6 angeordnet, wobei es sich vorliegend um eine einflügelige Klappe handelt, deren Schwenkachse oberhalb des Heizers H und beabstandet vom Luftführungsgehäuse 2 angeordnet ist. Die Schwenkachsen beider Temperaturklappen 4 und 6 verlaufen vorliegend senkrecht zur Fahrzeugmittellängsebene.

Wie aus Fig. 1 ersichtlich, wird in dem Betriebszustand "maximal warm" die gesamte vom Verdampfer V kommende Luft direkt nach demselben auf Grund der ersten Trennwand 3 und der geschlossenen, ersten Temperaturklappe 4 nach oben, über den Heizer H gelenkt und strömt durch einen oberen Luftkanal 7, durch die vollständig geöffnete zweite Temperaturklappe 6 nach unten umgelenkt, von oben her durch den Heizer H. Anschließend gelangt der Luftstrom zu einem Mischraum 8, von dem aus verschiedene Luftkanäle 9 zum Fahrzeuginnenraum im Fondbereich abzweigen, wie vorliegend der Luftkanal 9a zum Fondfußraum, der Luftkanal 9b zum Luftaustritt bei der B-Säule und der Luftkanal 9c für die allgemeine Fondbelüftung. Die Regelung der Luftverteilung erfolgt mit Hilfe von Klappen auf an sich bekannte Weise. Das Luftführungsgehäuse 2 im Bereich des Mischraums 8 ist derart ausgeführt, dass auch der in Hinblick auf die Ausströmrichtung der Luft aus dem Heizer H etwas ungünstig gerichtete Luftstrom umgelenkt wird und zumindest ein Teil desselben auch bei vollständig geöffneten Luftkanälen 9a und 9b noch zum weiter oben angeordneten Luftkanal 9c für die allgemeine Fondbelüftung gelangt.

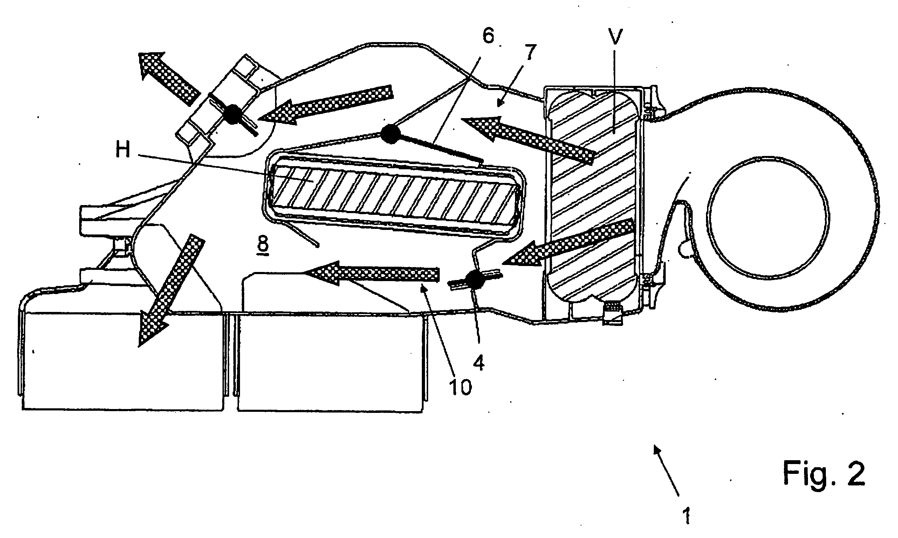

Im Betriebszustand "maximal kalt", der in Fig. 2 dargestellt ist, ist die erste Temperaturklappe 4 unterhalb des Heizers H vollständig geöffnet, wodurch ein unterer Luftkanal 10 unterhalb des Heizers H direkt zum Mischraum 8 für einen Teil der vom Verdampfer V kommenden Luft freigegeben wird, während die zweite Temperaturklappe 6 oberhalb des Heizers H einen Lufteintritt zum Heizer H vollständig verschießt, so dass der andere Teil der vom Verdampfer V kommenden Luft durch den oberen Luftkanal 7 vorbei am Heizer H und direkt zu einem oberen Bereich des Mischraums 8 geleitet wird, wo sich die beiden Teilluftströme nach dem Umströmen des Heizers H treffen und auf die einzelnen Luftkanäle 9 verteilt werden.

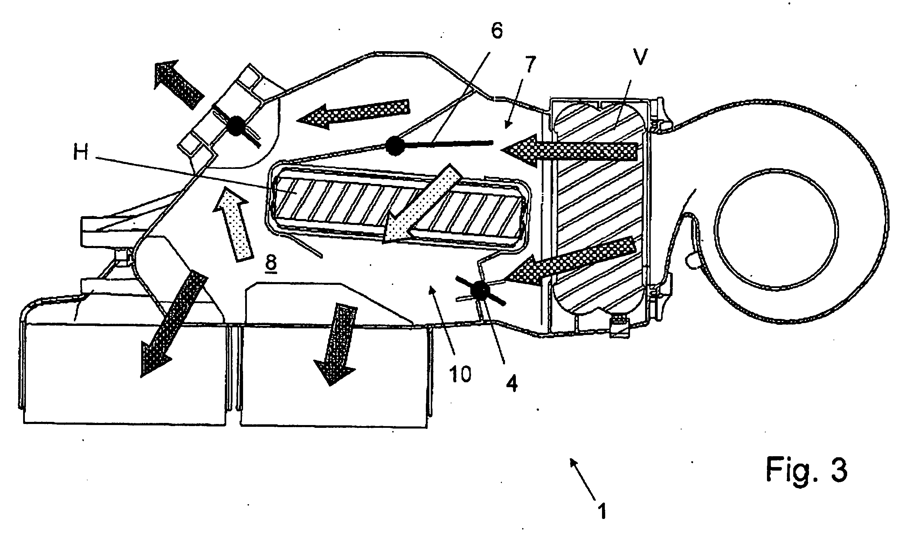

In Fig. 3 ist ein Betriebszustand dargestellt, bei dem beide Temperaturklappen 4 und 6 teilweise geöffnet sind. In diesem Betriebszustand strömt ein Teil des vom Verdampfer V kommenden, oberen Teilluftstroms oben am Heizer H vorbei und gelangt direkt von oben her in den Mischraum 8, und ein Teil des oberen Teilluftstroms wird durch den Heizer H geleitet und von demselben erwärmt. Dieser warme Teilluftstrom wird dem vom Verdampfer V kommenden, kalten, unteren Teilluftstrom, der durch die teilweise geöffnete erste Temperaturklappe 4 strömt, beigemischt, so dass dieser Teil des Luftstroms erwärmt von unten her zum Mischraum 8 gelangt. Auf Grund der Anordnung der Eintrittsöffnungen in die Luftkanäle 9 erfolgt automatisch eine gewisse Temperaturschichtung, gemäß der die dem oberen Bereich des Fond-Fahrzeuginnenraums zugeführte Luft kühler als die dem unteren Bereich zugeführte Luft ist, was in der Regel als angenehm empfunden wird.

Gemäß einer nicht in der Zeichnung dargestellten Variante kann parallel zu dem Heizer H auch ein vorzugsweise elektrisch betriebener Zuheizer, bspw. mit PTC-Elementen, angeordnet sein. Dabei kann der Zuheizer luftan-und/oder luftabströmseitig des Heizers H angeordnet sein, oder sogar ganz oder teilweise in denselben integriert sein. Die weitere Ausgestaltung der Klimaanlage entspricht der des zuvor beschriebenen Ausführungsbeispiels, so dass hierauf nicht näher eingegangen wird.

Die Klimaanlage gemäß dem ersten Ausführungsbeispiel, wie auch der Variante, kann zudem, obwohl vorstehend nicht näher beschrieben, auch mehrzonig, insbesondere zweizonig, ausgebildet sein, d.h. es sind entsprechende Trennwände und geteilte, getrennt ansteuerbare Klappen vorgesehen, um eine im Wesentlichen unabhängige Klimatisierung der einzelnen Zonen zu ermöglichen.

## Patentansprüche

1. Kraftfahrzeug-Klimaanlagenanordnung, insbesondere für eine Fond-Klimaanlage, mit mindestens einem Verdampfer (V) und mindestens einem in Luftströmungsrichtung nach dem Verdampfer (V) angeordneten Heizer (H), die in einem Luftführungsgehäuse (2) angeordnet sind, wobei der Heizer (H) zwischen zwei ober- und unterhalb der Luftdurchtrittsfläche des Heizers (H) angeordneten Luftkanälen- (7 und 10), die von vom Verdampfer (V) kommender, kalter Luft durchströmbar sind, angeordnet ist, wobei die Ebenen des Heizers (H) und des Verdampfers (V) jeweils senkrecht von Luft durchströmbar sind, wobei der Heizer (H) in normaler Luftströmungsrichtung nach dem Verdampfer (V) liegend angeordnet ist, wobei mit mindestens zweier Temperaturklappen (4, 6), wobei mindestens eine Temperaturklappe (6) oberhalb des Heizers (H) und mindestens eine Temperaturklappe (4) unterhalb des Heizers (H) angeordnet ist, bei voller Kühlleistung der Klimaanlage die Luft oben und unten am Heizer (H) vorbeileitbar ist, **dadurch gekennzeichnet, dass** die Ebenen des Heizers (H) und des Verdampfers (V) in einem Winkel von 98° +/- 10° zueinander angeordnet sind, dass der Verdampfer (V) stehend angeordnet ist, und dass Heizer H) in einem Winkel von maximal 10°, insbesondere von maximal 5°, und mehr als 0° geneigt zur Horizontalen angeordnet ist, so dass das dem Verdampfer (V) nähere Ende des Heizers (H) tiefer als das gegenüberliegende, vom Verdampfer (V) beabstandete Ende des Heizers (H) angeordnet ist.

2. Kraftfahrzeug-Klimaanlaagenanordnung nach Anspruch 1, **dadurch gekennzeichnet, dass** Heizer (H) bezüglich der Vertikalen mittig vor dem Verdampfer (V) angeordnet ist.

3. Kraftfahrzeug-Klimaanlagenanordnung nach einem der vorhergehenden Ansprüche, **dadurch gekennzeichnet, dass** das benachbarte Ende des Heizers (H) maximal eine Länge, die der zweifachen Tiefe, insbesondere der einfachen Tiefe, des Heizers (H) entspricht, vom Verdampfer (V) beabstandet ist.

4. Kraftfahrzeug-Klimaanlagenanordnung nach einem der vorhergehenden Ansprüche, **dadurch gekennzeichnet, dass** der Heizer (H) von oben her von Luft durchströmbar ist.

5. Kraftfahrzeug-Klimaanlagenanordnung nach Anspruch 1 bis 4, **dadurch gekennzeichnet, dass** ein Gebläse (G) räumlich in Höhe mit und im Kraftfahrzeug in normaler Fahrtrichtung desselben vor dem Verdampfer (V) und Heizer (H) angeordnet ist.

6. Kraftfahrzeug-Klimaanlagenanordnung nach einem der vorhergehenden Ansprüche, **dadurch gekennzeichnet, dass** ein Gebläse (G) neben dem Verdampfer (V) und Heizer (H) angeordnet ist, wobei die Drehachse des Gebläses (G) in horizontaler Richtung verlaufend angeordnet ist.

7. Kraftfahrzeug-Klimaanlagenanordnung nach einem der vorhergehenden Ansprüche, **dadurch gekennzeichnet, dass** der minimale, von Luft durchströmte Querschnitt im Betriebszustand "maximal kalt" größer als der minimale, von Luft durchströmte Querschnitt im Betriebszustand "maximal warm" ist.

8. Kraftfahrzeug, **gekennzeichnet durch** eine Klimaanlagenanordnung, insbesondere für eine Fond-Klimaanlage, nach einem der Ansprüche 1 bis 7.

## Claims

1. A motor vehicle air conditioning system arrangement, in particular for a rear air conditioning system, with at least one evaporator (V) and at least one heater (H) arranged in the air flow direction downstream of the evaporator (V), which are arranged in an air guiding housing (2), wherein the heater (H) is arranged between two air ducts (7 and 10) which are arranged above and below the air passage area of the heater (H) and through which cold air coming from the evaporator (V) can flow, wherein air can flow vertically through each of the planes of the heater (H) and the evaporator (V), wherein the heater (H) is arranged in the normal air flow direction downstream of the evaporator (V) in horizontal position, wherein with at least two temperature valves (4, 6), at least one temperature valve (6) being arranged above the heater (H) and at least one temperature valve (4) being arranged below the heater (H), the air can be directed past the top and the bottom of the heater (H) at full cooling capacity of the air conditioning system, **characterized in that** the planes of the heater (H) and the evaporator (V) are arranged at an angle of 90° +/- 10° to each other, that the evaporator is arranged in vertical position, and that the heater (H) is arranged inclined at an angle of not more than 10°, in particular not more than 5°, and of more than 0° to the horizontal, so that the end that is closer to the heater (H) is arranged lower than the opposite end of the heater (H), which end is spaced apart from the evaporator (V).

2. The motor vehicle air conditioning system arrangement according to claim 1, **characterized in that** with regard to the vertical, the heater (H) is arranged centrally upstream of the evaporator (V).

3. The motor vehicle air conditioning system arrangement according to any one of the preceding claims, **characterized in that** the adjacent end of heater (H) is spaced apart from the evaporator (V) by a maximum length that corresponds to two times the depth, in particular to one time the depth, of the heater (H).

4. The motor vehicle air conditioning system arrangement according to any one of the preceding claims, **characterized in that** air can flow from above through the heater (H).

5. The motor vehicle air conditioning system arrangement according to the claims 1 to 4, **characterized in that** a blower (G) is spatially arranged at the height of the evaporator (V) and the heater (H), and is arranged in the motor vehicle in the normal driving direction thereof upstream of the evaporator and the heater.

6. The motor vehicle air conditioning system arrangement according to any one of the preceding claims, **characterized in that** a blower (G) is arranged next to the evaporator (V) and the heater (H), wherein the rotational axis of the blower (G) is arranged extending in the horizontal direction.

7. The motor vehicle air conditioning system arrangement according to any one of the preceding claims, **characterized in that** the minimum cross-section through which air flows is greater in the operating state "maximum cold" than the minimum cross-section through which air flows in the operating state "maximum hot".

8. A motor vehicle, **characterized by** an air conditioning system arrangement, in particular for a rear air conditioning system, according to any one of the claims 1 to 7.

## Revendications

1. Agencement d'un système de climatisation d'un véhicule automobile, en particulier pour un système de climatisation de la partie arrière, comprenant au moins un évaporateur (V) et au moins un dispositif de chauffage (H) disposé en aval de l'évaporateur (V) suivant la direction d'écoulement de l'air, évaporateur et dispositif de chauffage qui sont disposés dans un carter de guidage d'air (2), où le dispositif de chauffage (H) est disposé entre deux conduits d'air (7 et 10) disposés au-dessus et au-dessous de la surface de passage d'air du dispositif de chauffage (H), conduits d'air qui peuvent être traversés par de l'air froid venant de l'évaporateur (V), où les plans du dispositif de chauffage (H) et de l'évaporateur (V) peuvent être traversés à chaque fois, perpendiculairement, par de l'air, où le dispositif de chauffage (H) est disposé en se trouvant en aval de l'évaporateur (V), suivant la direction d'écoulement normale de l'air, où avec au moins deux volets de température (4, 6), au moins un volet de température (6) étant disposé au-dessus du dispositif de chauffage (H) et au moins un volet de température (4) étant disposé au-dessous du dispositif de chauffage (H), à pleine puissance de refroidissement du système de climatisation, l'air venant du haut et du bas peut être dirigé en passant devant le dispositif de chauffage (H), **caractérisé en ce que** les plans du dispositif de chauffage (H) et de l'évaporateur (V) sont disposés en formant un angle de 90° +/- 10° l'un par rapport à l'autre, **en ce que** l'évaporateur (V) est disposé verticalement et **en ce que** le dispositif de chauffage (H) est disposé en étant incliné par rapport à l'horizontale suivant un angle au maximum de 10°, en particulier au maximum de 5° et de plus de 0°, de sorte que l'extrémité du dispositif de chauffage (H) située plus près de l'évaporateur (V) est disposée en étant plus basse que l'extrémité opposée du dispositif de chauffage (H) située à distance de l'évaporateur (V).

2. Agencement d'un système de climatisation d'un véhicule automobile selon la revendication 1, **caractérisé en ce que** le dispositif de chauffage (H) est disposé devant l'évaporateur (V), au milieu par rapport à la verticale.

3. Agencement d'un système de climatisation d'un véhicule automobile selon l'une ou l'autre des revendications précédentes, **caractérisé en ce que** l'extrémité rapprochée du dispositif de chauffage (H) est espacée de l'évaporateur (V) au maximum suivant une longueur qui correspond à deux fois la profondeur, en particulier à une fois la profondeur du dispositif de chauffage (H).

4. Agencement d'un système de climatisation d'un véhicule automobile selon l'une quelconque des revendications précédentes, **caractérisé en ce que** le dispositif de chauffage (H) peut être traversé par de l'air venant d'en haut.

5. Agencement d'un système de climatisation d'un véhicule automobile selon l'une quelconque des revendications 1 à 4, **caractérisé en ce qu'**un pulseur (G) est disposé, dans l'espace, à hauteur de l'évaporateur (V) et du dispositif de chauffage (H) et, dans le véhicule automobile, dans la direction normale de marche de celui-ci, est disposé devant ces mêmes évaporateur et dispositif de chauffage.

6. Agencement d'un système de climatisation d'un véhicule automobile selon l'une quelconque des revendications précédentes, **caractérisé en ce qu'**un pulseur (G) est disposé à proximité de l'évaporateur (V) et du dispositif de chauffage (H), où l'axe de rotation du pulseur (G) est disposé en s'étendant suivant une direction horizontale.

7. Agencement d'un système de climatisation d'un véhicule automobile selon l'une quelconque des revendications précédentes, **caractérisé en ce que** la section minimale traversée par de l'air, dans l'état de fonctionnement en mode "froid maximum", est plus grande que la section minimale traversée par de l'air, dans l'état de fonctionnement en mode "chaud maximum".

8. Véhicule automobile **caractérisé par** un agencement d'un système de climatisation, en particulier pour un système de climatisation de la partie arrière, selon l'une quelconque des revendications 1 à 7.
